# EUROPEAN PATENT APPLICATION

(11) **EP 1 739 916 A1**
(43) Date of publication of application: **03.01.2007**
(21) Application number: 05014193.6
(22) Date of filing: 30.06.2005
(51) Int. Cl.: H04L 29/06, H04L 12/56, H04L 29/08

(54) **Network arrangement and method for handling sessions in a telecommunications network**

(71) Applicant: SIEMENS AKTIENGESELLSCHAFT, 80333 München (DE)
(72) Inventor: Papadimitriou, Dimitris, Dr., 11254 Athen (GR)

(57) **Abstract**

The present invention relates to a novel network arrangement and method for handling sessions or calls in a communications network. More particularly, the invention provides a novel network arrangement and method for avoiding "ghost calls" in IP based communications networks for achieving higher session completion rates. An inventive network arrangement comprises at least the following: a session border controller (140) for monitoring and/or controlling available resources for sessions involving a user terminal and for determining a busy condition if a new session's resource requirements are in excess of the available resources and for notifying an origination of the new session upon if a busy condition exists; and an application server (152) receiving a session completion request from the new session's origination and for establishing the session after the busy condition has ceased. The invention is useful if the busy condition is encountered at a destination and also if the busy condition is encountered at the new session's origination, i.e. if a calling user's available resources are insufficient to accommodate the newly requested session.

## Description

The present invention relates to a novel network arrangement and method for handling sessions or calls in a communications network. More particularly, the invention provides a novel network arrangement and method for achieving higher session completion rates in IP based communications networks by avoiding "ghost calls".

Modern telecommunication networks often employ voice over Internet Protocol (VoIP) techniques to convey telephone calls between users. A widely used VoIP technique is known as the Session Initiation Protocol (SIP) and defined by IETF RFC 3261. SIP is an application-layer control (signaling) protocol for creating, modifying, and terminating sessions with one or more participants. These sessions include Internet telephone calls, multimedia distribution, and multimedia conferences.

A problem occurs when using SIP if a first user initiates a call, or "session", the SIP signaling completes successfully and a called second user's terminal equipment starts ringing, but there is not enough bandwidth available for carrying out a voice transaction, for example, if all available bandwidth at the called user's network access is occupied by some other application such as another voice or data transaction. In such cases, if the called user responds to this call, the call, or session, is established but insufficient bandwidth will prevent the users from talking to each other. Such "ghost calls" are clearly undesirable for both users and network operators. For example, since the signaling completed successfully, the calling first user would be charged for a call that was in fact not successful.

IETF RFC 3312 entitled "Integration of Resource Management and SIP" addresses this problem. RFC 3312 describes how network quality of service can be introduced as a precondition for establishment of sessions initiated by the Session Initiation Protocol (SIP). According to RFC 3312, session establishment does not take place, i.e. the called user is not alerted, until certain preconditions, based on network resources availability, for the media stream are met. Initial failure to meet these preconditions may lead to a re-negotiation such as selection of a lower bandwidth codec by the endpoints. At the called endpoint, either the desired resources are reserved or the session establishment will fail. Using the teachings of RFC 3312, "ghost calls" can be avoided.

However, with the methods disclosed in RFC 3312, neither called nor calling user have any control over the completion of the call. When encountering a busy condition, the only option available to the calling user is to reattempt the call at a later time.

It is therefore an object of the present invention to provide a novel network arrangement allowing for further options for either or both the called and calling user. It is another object of the invention to provide a novel method for handling sessions in a telecommunications network.

In accordance with the foregoing objects, there is provided by the invention a network arrangement comprising at least the following:
- a session border controller for monitoring and/or controlling available resources for sessions involving a user terminal and for determining a busy condition if a new session's resource requirements are in excess of the available resources and for notifying an origination of the new session of a busy condition; and
- an application server for receiving a session completion request from the new session's origination and for establishing the session after the busy condition has ceased.

The invention further provides a method for handling sessions in a telecommunications network, comprising:
- in a session border controller, monitoring and/or controlling available resources for sessions involving a user terminal and determining a busy condition if a new session's resource requirements are in excess of the available resources and notifying an origination of the new session of a busy condition; and
- in an application server, receiving a session completion request from the new session's origination and establishing the session after the busy condition has ceased.

One advantage of the present invention is that it allows for services that enable the calling user to request the completion of the session establishment upon cessation of the busy condition. The invention is useful if the busy condition is encountered at a destination and also if the busy condition is encountered at the new session's origination, i.e. if a calling user's available resources are insufficient to accomodate the newly requested session.

A preferred signaling protocol for use with the present invention is the Session Initiation Protocol SIP.

To determine the cessation of the busy condition, a preferred method is that the application server subscribes to the session border controller's monitoring function in order to be notified by the border controller when the busy condition has ceased for the previously insufficient resource.

In an alternative, the cessation of the busy condition can be determined by a Presence service. Presence service refers to the ability to access in real-time information about a subscriber's status, communications capabilities, and/or preferences. Presence is relevant to virtually every means of communication: mobile, VoIP, e-mail, etc. "Status" refers to the subscriber's availability, free/busy condition, etc. "Capabilities" include information such as support of video on a VoIP phone, support of voice mail on the mobile phone, etc. Finally, "preferences" include properties like call routing information (e.g. "contact me at my mobile first, then try home").

The Presence service may comprise presence information of a subscriber and information on a subscriber's devices, services and service components being managed by a network. A presence entity or Presentity may comprise the subscriber, the subscriber's devices, services and the service components. A Watcher, on the other hand, is any uniquely identifiable entity that uses the presence service to request presence information about a Presentity.

The Presence service may provide access to presence information to be made available to other subscribers or services. Applications of the Presence service include the creation of enhanced rich multimedia services. In conjunction with the present invention, the Presence service may be used for monitoring the busy conditions at a busy endpoint or presentity, on behalf of the requesting party or watcher. This would allow the requesting user to complete the session as soon as the busy conditions are no longer valid existent.

Resource control and/or monitoring may be accomplished by monitoring and/or controlling at least one of the following parameters: available bandwidth; number of available media streams; any other parameter relating to a user terminal and representing a resource subject to a physical or other limitation.

In the following, preferred embodiments of the invention will be described with reference to a figure.

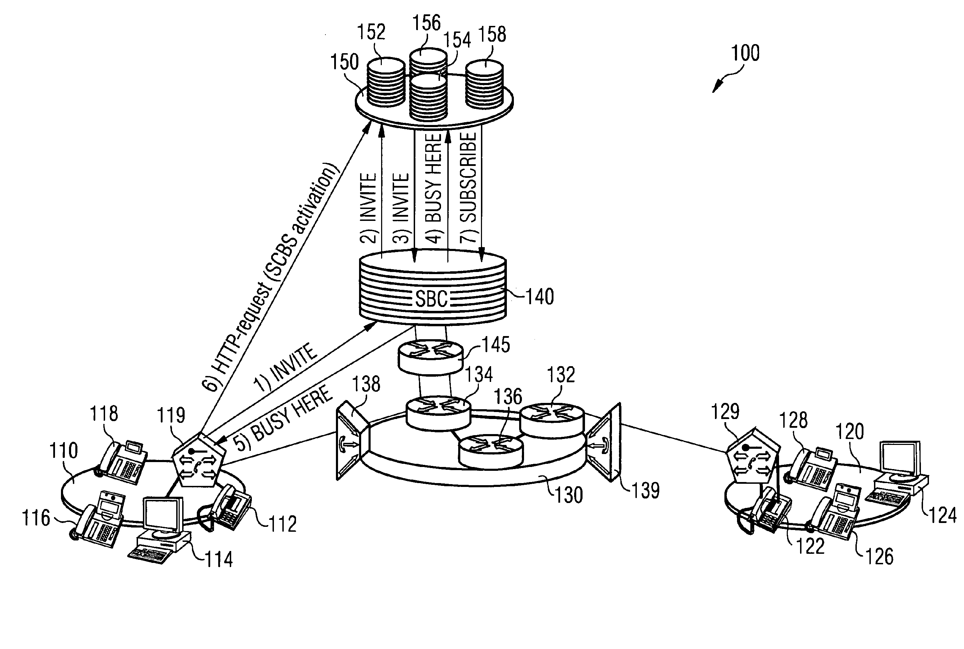

In the figure, there is shown an exemplary network arrangement 100 comprising user terminal equipment 110, 120 connected to a packet backbone network 130, a Session Border Controller or SBC 140, and an application server farm 150.

User terminal equipment 110, 120 may comprise either one or a combination of the following: analog telephony equipment 112, 122; personal computers 114, 124; video telephony equipment 116, 126; ISDN or other digital telephony equipment 118, 128; and SIP gateways 119, 129. In alternative configurations, SIP phones and/or SIP clients are used instead of SIP gateways 119, 129 and legacy equipment - not shown.

The packet backbone network 130 may comprise routing equipment such as routers 132, 134, 136. For connecting the user terminal equipment 110, 120 to the packet backbone network 130 a variety of so-called access technologies may be employed such as T1/E1 lines, DSL techniques, Ethernet techniques such as Metropolitan Ethernet, or wireless techniques such as Wireless Local Loop (WLL). The illustrative embodiment comprises optional multiplexer/concentrators 138, 139 for connecting to user terminal equipment 110, 120, respectively.

Depending on a chosen access technology, various access protocols may be employed as is well known in the art. The protocol hierarchy will, however, in many cases comprise the Internet Protocol (IP) as a network layer packet protocol. IP may be used throughout the packet backbone network 130 and for connecting user terminal equipment 110, 120. For residential access, the Peer-to-Peer Protocol (PPP), the Peer-to-Peer Protocol over Ethernet (PPPoE), or the Peer-to-Peer Tunneling Protocol (PPTP) are often used for connecting user terminal equipment 110, 120 to the packet backbone network 130. These protocols, in turn, allow the exchange of IP packets.

SBC 140 may be coupled to packet backbone network 130 directly or by means of an edge router 145. SBC 140 is also communicatively coupled to application servers 152-158 of application server farm 150. Of course, a single application server 152 may alternatively be chosen if suitable to perform all required application server functions - not shown.

SIP Call Control, or signaling, is symbolized throughout the figure by dashed lines.

In accordance with the invention, SBC 140 is used for resource availability inspection before a session is offered to the session's destination. In the example shown in the figure, it is assumed that a session originates from a first user's terminal equipment 110 (also denoted calling party or origination) - step 1. It is further assumed that the session's destination is a second user's terminal equipment 120 (also denoted called party).

One of the functions of SBC platforms such as SBC 140 is resource management. VoIP traffic, due to its requirement for continuous low-latency high-packet rate flows, is sensitive to any bandwidth restrictions. Therefore, SBC platforms are typically employed for providing bandwidth consumption based policies that enable the limiting of bandwidth consumption per end user or enterprise customer. Other resources may also be monitored and/or controlled based on other subscription or policy information such as allowable number of simultaneous sessions.

For example, a bandwidth policy may be applied by examining in real-time the bandwidth used by both outgoing and incoming active media streams, inspecting new sessions for their required bandwidth usage or codec profile, and dropping new sessions that could cause the total bandwidth consumption to exceed a pre-defined upper bound. Such pre-defined upper bound may also be a physical bandwidth limitation of the chosen (access) transmission technology.

Instead of the parameter "bandwidth", other parameters may be monitored and/or controlled such that the number of active media streams does not exceed a pre-defined limit.

Restrictions may be physical in nature or may result from business models or Service Level Agreements (SLA). If any such restriction leads to a new session being dropped because the new session's resource requirements exceed the available resources, this condition is termed "busy condition". Upon encountering a busy condition, the SBC 140 creates a corresponding busy notification for informing the calling party 110 of the busy condition - shown as step 5 in the figure.

In accordance with the invention, SBC 140 checks for busy conditions before offering the SIP INVITE message to destination 120, while in prior art implementations and without using the invention, the INVITE message would immediately be sent to the destination. Triggered by the SDP response as contained in the 183 "Session Progress" message, the resource authorization would then take place.

If a busy condition is encountered then the SBC will return a 486 "Busy Here" message, which in embodiments may optionally be intercepted by or redirected to a corresponding terminating Application Server (AS) 152-158 controlling either one or both of the services "Session Redirection" or "Session Waiting", if the called party has subscribed to any of these services - optional steps 2, 3, 4.

Upon receiving the busy notification in step 5, for example as 486 "Busy Here" message, at the calling user's equipment the session (or call) completion service can be invoked for automatically reattempting (or completing) the session upon the resource becoming available again. Such request is forwarded to a corresponding call completion application server 152 - step 6.

It shall be noted that the lack of available resources may occur at the session's destination 120. When invoking the session completion service, the calling user invokes a "Session Completion on Busy Subscriber" (SCBS) service, which is described in more detail with reference to an example in the following.

In the example, a called SIP subscriber 120 is invited to a video conference. However, there is not enough bandwidth to establish the session because the called subscriber 120 is at the same time downloading data from the Internet and in addition has an active voice call. The SBC 140 detects the busy condition and returns a 486 "Busy Here" message - step 5. The calling user 110 (i.e., the originator of the video session) activates SCBS through an http-request, which is handled by application server 152, so that the video session can be established as soon as the required bandwidth is released. To achieve this, the application server 152 may monitor the bandwidth resources at the terminating side by "subscribing" to the terminating endpoint - step 7. When bandwidth is available the application server 152 "invites" the originator of the session 110, and as soon as the originator answers, the application also "invites" the destination 120.

Alternatively, a presence service may be utilized for monitoring the busy conditions.

It shall further be noted that the lack of available resources may also occur at the session's origination 110. A busy condition at the origination may for example occur if the calling user has too many active sessions and the additional session would not be permitted under the user's SLA or would require more bandwidth than still available. When invoking the session completion service, the calling user in this case invokes a "Originating Session Completion on Busy" (OSCB) service, which may be handled as described in the example above except that the busy condition to be monitored exists at the origination of the call.

## Claims

1. A network arrangement (100) comprising at least the following:
- a session border controller (140) for monitoring and/or controlling available resources for sessions involving a user terminal (110, 120) and for determining a busy condition if a new session's resource requirements are in excess of the available resources and for notifying an origination (110) of the new session of a busy condition; and
- an application server (152) for receiving a session completion request from the new session's origination (120) and for establishing the session after the busy condition has ceased.

2. The network arrangement according to claim 1 wherein the application server comprises means for subscribing to the session border controller's monitoring function in order to determine the cessation of the busy condition.

3. The network arrangement according to claim 1 wherein the application server comprises means for employing a Presence service for determining the cessation of the busy condition.

4. The network arrangement according to any of claims 1 through 3 wherein signaling is accomplished by means of the Session Initiation Protocol SIP.

5. The network arrangement according to any of claims 1 through 4 wherein the session border controller (140) monitors and/or controls available resources by monitoring and/or controlling at least one of the following parameters: available bandwidth; number of available media streams; any other parameter relating to a user terminal and representing a resource subject to a physical or other limitation.

6. A method for handling sessions in a telecommunications network (100), comprising:
- in a session border controller (140), monitoring and/or controlling available resources for sessions involving a user terminal (110, 120) and determining a busy condition if a new session's resource requirements are in excess of the available resources and notifying an origination (110) of the new session of a busy condition; and
- in an application server, receiving a session completion request from the new session's origination (120) and establishing the session after the busy condition has ceased.

7. The method according to claim 6, **characterized in that** the application server subscribes to the session border controller's monitoring function in order to determine the cessation of the busy condition.

8. The method according to claim 6, **characterized in that** the cessation of the busy condition application is determined by a Presence service.

9. The method according to any of claims 6 through 8, **characterized in that** signaling is accomplished by means of the Session Initiation Protocol SIP in the telecommunications network.

10. The method according to any of claims 6 through 9 wherein the step of monitoring and/or controlling available resources includes monitoring and/or controlling at least one of the following parameters: available bandwidth; number of available media streams; any other parameter relating to a user terminal and representing a resource subject to a physical or other limitation.
